(19) **Europäisches Patentamt**

**European Patent Office**

**Office européen des brevets**

(11) **EP 0 717 528 B1**

(12) **EUROPEAN PATENT SPECIFICATION**

(45) Date of publication and mention
of the grant of the patent:
**28.05.2003 Bulletin 2003/22**

(51) Int Cl.⁷: **H04L 7/00**, B60R 16/02,
H04L 25/49, H04L 7/02

(21) Application number: **95306996.0**

(22) Date of filing: **03.10.1995**

(54) **Method and apparatus for data communication**

Verfahren und Gerät zur Datenübertragung

Appareil et procédé pour la communication de données

(84) Designated Contracting States:
**DE FR GB IT**

(30) Priority: **12.12.1994 US 353601**

(43) Date of publication of application:
**19.06.1996 Bulletin 1996/25**

(73) Proprietor: **Ford Motor Company**
**Dearborn, MI 48126 (US)**

(72) Inventors:
• **Deljevic, Zeljko**
**Westland, Michigan 48185 (US)**

• **Debiasi, Charles James**
**Plymouth Township, Michigan 48170 (US)**
• **Renehan, John Francis**
**South Lyon, Michigan 48178 (US)**
• **Tuteja, Vikas**
**Novi, Michigan 48374 (US)**

(74) Representative: **Messulam, Alec Moses et al**
**A. Messulam & Co. Ltd.,**
**43-45 High Road**
**Bushey Heath, Bushey, Herts WD23 1EE (GB)**

(56) References cited:
**WO-A-93/21716          US-A- 5 140 611**

## Description

### Field of the invention

The present invention relates generally to data communication, and more specifically to data communication in a system with a device having a time base with a parameter which varies over time.

### Background of the invention

A common method of data communication is pulse-width modulation (PWM). In pulse-width modulation, a fixed frequency signal is normally used. The data to be communicated with this signal is encoded as a "duty cycle" (i.e., a percentage of the total period of the signal that the signal is in its ON state).

Devices that communicate using pulse-width modulation usually employ some form of time base to generate and decode the pulse-width-modulated signals involved. Such time bases can vary from high-accuracy, high-stability time bases such as quartz crystals to lower-cost time bases such as resistive-capacitive (RC) oscillators. Such lower-cost time bases may also be able to withstand more severe environments (e.g., near the engine of an automobile) than other time bases.

Lower-cost time bases can exhibit some drift in frequency over time and temperature. Those skilled in the art recognise that such drift can pose a significant concern to PWM communication. US Patent No 5 140 611 discloses a data communication system in which synchronous digital data is transmitted from a master unit to a slave unit. The transmission is via a pulse width modulated data stream including pulse width modulated binary data pulses and a pulse width modulated synchronisation pulse. The data and synchronisation pulses all have a leading edge at the same point in each cycle of a master clock signal provided by a master clock. The slave unit derives a clock signal from the received binary data stream to decode the received data. The synchronisation pulse is employed to maintain phase synchronisation. The slave unit has no oscillator of its own but relies on the clock signal derived from the received data steam.

### Object of the invention

The invention seeks to provide a method of compensating for drift in frequency, while still taking advantage of the lower cost and potentially superior environmental durability of lower-cost time bases.

### Summary of the invention

In accordance with a first aspect of the invention, there is provided a method for data communication between a first device and a second device, said first device configured to transmit a first signal to said second device and said second device configured to transmit a second signal to said first device, the method comprising the steps of;

measuring at the second device a parameter of the first signal transmitted by the first device; and

adjusting the corresponding parameter of the second signal transmitted by the second device in response to the measured parameter;

characterised in that;

a first oscillator is employed in the first device as a time base for the first signal and a second oscillator is employed in the second device as a time base for the second signal, the first oscillator being subject to drift in frequency relative to the second oscillator;

the step of measuring, at the second device, a parameter of the first signal consists of measuring the frequency of the first signal by reference to the second oscillator;

the method includes the further step of decoding the second signal at the first device by reference to the first oscillator, and

the step of adjusting the corresponding parameter of the second signal transmitted by the second device consists of adjusting the frequency of the second signal to counteract the effect of the said drift in frequency on decoding the second signal at the first device.

In accordance with a second aspect of the invention, there is provided data communication apparatus comprising a first device configured to transmit a first signal to a second device, said second device being configured to transmit a second signal to said first device, the apparatus comprising ;

measuring means at the second device adapted to measure a parameter of the first signal transmitted by the first device; and

adjusting means to adjust the corresponding parameter of the second signal transmitted by the second device in response to the measured parameter;

characterised in that;

the first device includes a first oscillator as a time base for the first signal and the second device includes a second oscillator as a time base for the second signal, the first oscillator being subject to drift in frequency relative to the second oscillator;

the measuring means at the second device is adapted to measure the frequency of the first signal by reference to the second oscillator;

the apparatus includes decoding means in the first device to decode the second signal by reference to the first oscillator, and

the adjusting means is adapted to adjust the frequency of the second signal to counteract the effect of the said drift in frequency on decoding of the second signal by the decoding means in the first device.

### Brief description of the drawings

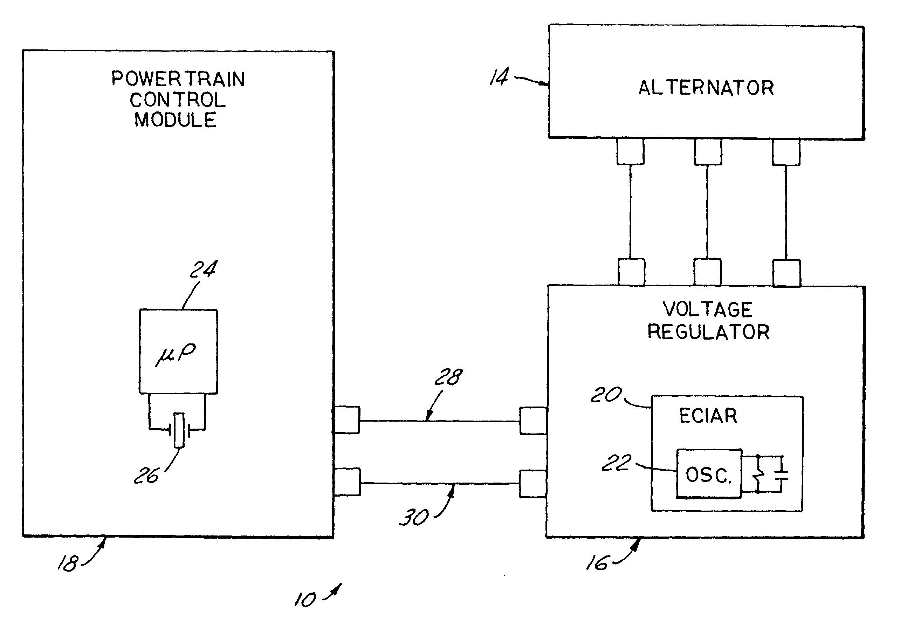

The invention will now be described further, by way of example, with reference to the accompanying drawings, in which the single figure shows a block diagram of s system embodying the invention.

Detailed description of the preferred embodiment

The drawing illustrates a portion of the system described in co-pending European Patent Application No. 95304456.7 filed by the present Applicants on 26 June 1995. The entire disclosure of the latter application is hereby incorporated by reference.

The system 10 comprises an alternator 14, the voltage of which is controlled by a voltage regulator 16. The voltage regulator 16 comprises an integrated circuit 20, called an "Externally-Controlled Integral Alternator Regulator" (ECIAR), manufactured by Motorola ®. Within integrated circuit 20 is a resistive-capacitive (RC) oscillator 22.

The system 10 further comprises a powertrain control module 18. The powertrain control module 18 is preferably an EEC-IV controller from Ford Motor Company, although other controllers can be substituted. Powertrain control module 18 is preferably a microprocessor-based device which contains sufficient microcomputer resources (memory, throughput, registers, inputs, outputs and the like) to perform the functions ascribed to it herein. Powertrain control module 18 has responsibility for a number of engine management functions including idle control, as are numerous powertrain control modules known to the art. In the preferred embodiment of the present invention, powertrain control module 18 further determines the voltage at which voltage regulator 16 is to control the output of alternator 14.

Powertrain control module 18 contains microprocessor 24, preferably an Intel 8061 microprocessor. Coupled to the microprocessor 24 is a crystal 26, the time base for the functions performed by the microprocessor 24.

Two circuits connect the voltage regulator 16 and the powertrain control module 18. Load indicator circuit 28 provides a pulse-width-modulated (PWM) signal from the voltage regulator 16 to the powertrain control module 18, the signal being generated by the integrated circuit 20. The duty cycle of the signal on the load indicator circuit 28 provides the powertrain control module 18 with a measure of the mechanical torque applied by the alternator 14 on the engine which drives it. For the purposes for which the signal is used in this disclosure, the signal preferably has a nominal frequency of 150 hertz.

The regulator control circuit 30 is used by he powertrain control module 18 to provide a command to the voltage regulator 16 indicating the output voltage at which the voltage regulator 16 should control the alternator 14. The signal provided by the powertrain control module 18 to the voltage regulator 16 on the regulator control circuit 30 is preferably pulse-width modulated, the duty cycle being a function of the desired output voltage command from the powertrain control module 18 to the voltage regulator 16. This PWM signal is generated by microprocessor 24. The frequency of this signal is selectable by loading appropriate values in appropriate memory locations. The nominal frequency of this signal is preferably proportional to the frequency on load indicator circuit 28 and more preferably equal to that frequency (150 hertz).

The oscillator 22 within the voltage regulator 16, being a relatively inexpensive R-C oscillator, is susceptible to variation in frequency over time. Further, the frequency can vary over temperature. These variations can interfere with accurate communication between the powertrain control module 18 and the voltage regulator 16.

This interference can occur because the oscillator 22 is the time base for decoding by the voltage regulator 16 of the PWM signal on the regulator control circuit 30. Oscillator 22 is also the time base for generation by the voltage regulator 16 of the PWM signal on the load indicator circuit 28. In decoding the signal received on the regulator control circuit 30, the integrated circuit 20 uses its oscillator 22 as input to a counter to measure how long the signal on regulator control circuit 30 remains in its ON state. So, if the oscillator 22 increases in frequency, for example, the counter will count higher for a given ON time of the signal on the regulator control circuit 30. This will make the voltage regulator 16 think that the powertrain control module 18 is commanding a higher voltage than is in fact the case.

Such a situation is prevented by an algorithm in powertrain control module 18. Powertrain control module 18 measures the period of the signal it receives on load indicator circuit 28 from voltage regulator 16. The measurement is performed using the following formula:

$$T = t_2 - t_1$$

where $t_1$ is the time at which a rising edge occurs, $t_2$ is the time at which the subsequent rising edge occurs, and T is the resultant period of the signal on the load indicator circuit 28. The frequency of the signal on the load indicator circuit 28 is then the reciprocal of the period. Because of the one-to-one relationship between frequency and period, frequency and period are equivalently appropriate parameters to measure for the purposes of this embodiment of the present invention. Because oscillator 22 is the time base for the generation of this signal, drifting of the frequency or period of the signal indicates drifting of the frequency of the oscillator 22.

If the powertrain control module 18 recognises that the frequency or period of the signal on the load indicator circuit 28 is drifting, the powertrain control module 18 adjusts the frequency of the signal generated by microprocessor 24 and transmitted on the regulator control circuit 30 in response to that frequency. Preferably, the frequency of the signal transmitted on the regulator control circuit 30 is adjusted to be proportional to the frequency of the signal on the load indicator circuit 28. More preferably, the frequency of the signal transmitted on regulator control circuit 30 is adjusted to be equal to the frequency of the signal on the load indicator circuit 28.

So, consider the same example as above. If the oscillator 22 increases in frequency, the frequency of the signal on the load indicator circuit 28 will also increase, because the oscillator 22 is the time base for encoding the signal on the load indicator circuit 28. The powertrain control module 18 will recognise the increased frequency and will accordingly increase the frequency of the signal on the regulator control circuit 30. Thus, for a given duty cycle, the ON time of the signal on the regulator control circuit 30 will decrease. This shorter ON time counteracts the decoding problem described above, caused by the increased frequency of the oscillator 22, which is the decoding time base for the voltage regulator 16.

## Claims

1. A method for data communication between a first device (16) and a second device (18), said first device (16) configured to transmit a first signal to said second device (18) and said second device (18) configured to transmit a second signal to said first device (16), the method comprising the steps of;

 measuring at the second device (18) a parameter of the first signal transmitted by the first device (16); and

 adjusting the corresponding parameter of the second signal transmitted by the second device (18) in response to the measured parameter;

 **characterised in that**;

 a first oscillator (22) is employed in the first device (16) as a time base for the first signal and a second oscillator (26) is employed in the second device (18) as a time base for the second signal, the first oscillator (22) being subject to drift in frequency relative to the second oscillator (26);

 the step of measuring, at the second device (18), a parameter of the first signal consists of measuring the frequency of the first signal by reference to the second oscillator (26);

 the method includes the further step of decoding the second signal at the first device (16) by reference to the first oscillator (22), and

 the step of adjusting the corresponding parameter of the second signal transmitted by the second device (18) consists of adjusting the frequency of the second signal to counteract the effect of the said drift in frequency on decoding the second signal at the first device (16).

2. A method as claimed in claim 1, wherein the first oscillator (22) is an R-C oscillator and the second oscillator is a crystal oscillator (26).

3. A method as claimed in claim 1 or 2, wherein the first and second signals are pulse-width modulated.

4. A method as claimed in claim 1, 2 or 3, applied to data communication in which the first device (16) is a voltage regulator for an automotive alternator and the second device (18) is a powertrain control module.

5. A method as claimed in any one of the preceding claims, wherein the step of adjusting the frequency of the second signal to counteract the effect of the said drift in frequency on decoding the second signal at the first device (16) consists of setting the frequency of the second signal to be proportional, or substantially equal, to the frequency of the first signal.

6. Data communication apparatus comprising a first device (16) configured to transmit a first signal to a second device (18), said second device (18) being configured to transmit a second signal to said first device (16), the apparatus comprising ;

 measuring means (24) at the second device (18) adapted to measure a parameter of the first signal transmitted by the first device (16); and

 adjusting means (24) to adjust the corresponding parameter of the second signal transmitted by the second device (18) in response to the measured parameter;

 **characterised in that**;

 the first device (16) includes a first oscillator (22) as a time base for the first signal and the second device includes a second oscillator (26) as a time base for the second signal, the first oscillator (22) being subject to drift in frequency relative to the second oscillator (26);

 the measuring means (24) at the second device (18) is adapted to measure the frequency of the first signal by reference to the second oscillator (26);

 the apparatus includes decoding means (20) in the first device (16) to decode the second signal by reference to the first oscillator (22), and

 the adjusting means (24) is adapted to adjust the frequency of the second signal to counteract the effect of the said drift in frequency on decoding of the second signal by the decoding means (20) in the first device (16).

7. Apparatus as claimed in claim 6, wherein the first oscillator (22) is an R-C oscillator and the second oscillator (26) is a crystal oscillator.

**8.** Apparatus as claimed in claim 6 or 7, wherein the first and second devices (16, 18) are configured to transmit the first and second signals as pulse-width modulated signals.

**9.** Apparatus as claimed in claim 6, 7 or 8, in which the first device (16) is a voltage regulator for an automotive alternator and the second device (18) is a powertrain control module.

**10.** Apparatus as claimed in any one of claims 6 to 9, wherein the adjusting means (24) is adapted to adjust the frequency of the second signal by setting the frequency of the second signal to be proportional, or substantially equal, to the frequency of the first signal.

**Patentansprüche**

**1.** Ein Verfahren zur Datenkommunikation zwischen einer ersten Vorrichtung (16) und einer zweiten Vorrichtung (18), wobei diese erste Vorrichtung (16) konfiguriert ist um ein erstes Signal zu dieser zweiten Vorrichtung (18) zu übertragen, und diese zweite Vorrichtung (18) konfiguriert ist um ein zweites Signal zu dieser ersten Vorrichtung (16) zu übertragen, wobei das Verfahren die Schritte umfaßt:

Messen eines Parameters des ersten - durch die erste Vorrichtung (16) übertragenen - Signals an der zweiten Vorrichtung (18); und Anpassen des entsprechenden Parameters des zweiten -durch die zweite Vorrichtung (18) übertragenen - Signals in Reaktion auf den gemessenen Parameter;

**dadurch gekennzeichnet daß**:

ein erster Oszillator (22) in der ersten Vorrichtung (16) als eine Zeitbasis für das erste Signal verwendet wird; und ein zweiter Oszillator (26) in der zweiten Vorrichtung (18) als Zeitbasis für das zweite Signal verwendet wird; wobei der erste Oszillator (22) relativ zu dem zweiten Oszillator (26) Gegenstand einer Drift in der Frequenz ist; der Schritt der Messung eines Parameters des ersten Signals an der zweiten Vorrichtung (18) daraus besteht, die Frequenz des erste Signals durch Bezug auf den zweiten Oszillator (26) zu messen; das Verfahren den weiteren Schritt einschließt das zweite Signals an der ersten Vorrichtung (16) durch Bezug auf den ersten Oszillator (22) zu entschlüsseln; und der Schritt der Anpassung des entsprechenden Parameters des zweiten -durch die zweite Vorrichtung (18) übertragenen- Signals daraus besteht die Frequenz des zweiten Signals anzupassen, um dem Effekt dieser Drift in der Frequenz - auf Entschlüsselung des zweiten Signals an der ersten Vorrichtung (16) hin - entgegenzuwirken.

**2.** Ein Verfahren gemäß Anspruch 1, in dem der erste Oszillator (22) ein R-C-Oszillator ist, und der zweite Oszillator ein Kristall-Oszillator (26) ist.

**3.** Ein Verfahren gemäß Anspruch 1 oder 2, in dem die ersten und zweiten Signale pulsbreitenmoduliert sind.

**4.** Ein Verfahren gemäß den Ansprüchen 1, 2 oder 3, angewendet auf die Datenkommunikation, in welchem die erste Vorrichtung (16) ein Spannungsregler für ein Kraftfahrzeug-Lichtmaschine ist, und die zweite Vorrichtung (18) eine Antriebstrang-Steuereinheit ist.

**5.** Ein Verfahren gemäß einem der vorstehenden Ansprüche, in dem der Schritt der Anpassung der Frequenz des zweiten Signals, um auf Entschlüsselung des zweiten Signals in der ersten Vorrichtung (16) hin dem Effekt dieser Drift in der Frequenz entgegenzuwirken, daraus besteht die Frequenz des zweiten Signals als der Frequenz des ersten Signals proportional oder im Wesentlichen gleich einzustellen.

**6.** Ein Datenkommunikations-Apparat, der eine erste Vorrichtung (16) umfaßt, die konfiguriert ist um ein erstes Signal zu einer zweiten Vorrichtung (18) zu übertragen, wobei diese zweite Vorrichtung (18) konfiguriert ist um ein zweites Signal zu dieser ersten Vorrichtung (16) zu übertragen; wobei der Apparat umfaßt:

eine Meßvorrichtung (24) an der zweiten Vorrichtung (18), angepaßt um einen Parameter des ersten, durch die erste Vorrichtung (16) übertragenen Signals zu messen; und eine Einstellvorrichtung (24), um den entsprechenden Parameter des zweiten, durch die zweite Vorrichtung (18) übertragenen Signals in Reaktion auf den gemessenen Parameter anzupassen;

**dadurch gekennzeichnet daß**:

die erste Vorrichtung (16) einen ersten Oszillator (22) als eine Zeitbasis für das erste Signals einschließt, und die zweite Vorrichtung einen zweiten Oszillator (26) als eine Zeitbasis für das zweite Signals einschließt; wobei der erste Oszillator (22) relativ zu dem zweiten Oszillator (26) Gegenstand einer Drift in der Frequenz ist; die Meßvorrichtung (24) an der zweiten Vorrichtung (18) angepaßt ist, um die Frequenz des ersten Signals durch Bezug auf den zweiten Oszillator (26) zu messen;

der Apparat eine Entschlüsselungsvorrichtung (20) in der ersten Vorrichtung (16) einschließt, um das zweite Signal unter Bezug auf den ersten Oszillator (22) zu entschlüsseln; und

die Einstellvorrichtung (24) angepaßt ist um die Frequenz des zweiten Signals anzupassen, um dem Effekt dieser Drift in der Frequenz - auf Entschlüsselung des zweiten Signals durch die Entschlüsselungsvorrichtung (20) in der ersten Vorrichtung (16) hin - entgegenzuwirken.

**7.** Ein Apparat gemäß Anspruch 6, in dem der erste Oszillator (22) ein R-C-Oszillator ist, und der zweite Oszillator (26) ein Kristall-Oszillator ist.

**8.** Ein Apparat gemäß Anspruch 6 oder 7, in dem die ersten und zweiten Vorrichtungen (16, 18) konfiguriert sind um die ersten und zweiten Signale als pulsbreiten-modulierte Signale zu übertragen.

**9.** Ein Apparat gemäß Anspruch 6, 7 oder 8, in welchem die erste Vorrichtung (16) ein Spannungsregler für eine Kraftfahrzeug-Lichtmaschine ist, und die zweite Vorrichtung (18) eine Antriebstrang-Steuereinheit ist.

**10.** Ein Apparat gemäß einem der Ansprüche 6 bis 9, in dem die Einstellvorrichtung (24) angepaßt ist um die Frequenz des zweiten Signals anzupassen, indem die Frequenz des zweiten Signals als der Frequenz des ersten Signals proportional oder im Wesentlichen gleich eingestellt wird.

## Revendications

**1.** Procédé destiné à une communication de données entre un premier dispositif (16) et un second dispositif (18), ledit premier dispositif (16) étant configuré pour transmettre un premier signal audit second dispositif (18), et ledit second dispositif (18) étant configuré pour transmettre un second signal audit premier dispositif (16), le procédé comprenant les étapes consistant à,

mesurer au niveau du second dispositif (18) un paramètre du premier signal transmis par le premier dispositif (16), et

ajuster le paramètre correspondant du second signal transmis par le second dispositif (18) en réponse au paramètre mesuré,

**caractérisé en ce que**,

un premier oscillateur (22) est utilisé dans le premier dispositif (16) en tant que base de temps pour le premier signal, et un second oscillateur (26) est utilisé dans le second dispositif (18) en tant que base de temps pour le second signal, le premier oscillateur (22) étant sujet à une dérive en fréquence par rapport au second oscillateur (26),

l'étape de mesure, au niveau du second dispositif (18) d'un paramètre du premier signal consiste à mesurer la fréquence du premier signal en faisant référence au second oscillateur (26),

le procédé comprend l'étape complémentaire consistant à décoder le second signal au niveau du premier dispositif (16) en faisant référence au premier oscillateur (22), et

l'étape d'ajustement du paramètre correspondant du second signal transmis par le second dispositif (18) consiste à ajuster la fréquence du second signal pour contrebalancer l'effet de ladite dérive en fréquence lors du décodage du second signal au niveau du premier dispositif (16).

**2.** Procédé selon la revendication 1, dans lequel le premier oscillateur (22) est un oscillateur R-C, et le second oscillateur est un oscillateur à cristal (26).

**3.** Procédé selon la revendication 1 ou 2, dans lequel les premier et second signaux sont modulés par largeur d'impulsion.

**4.** Procédé selon la revendication 1, 2 ou 3, appliqué à une communication de données dans laquelle le premier dispositif (16) est un régulateur de tension pour un alternateur d'automobile, et le second dispositif (18) est un module de commande de transmission.

**5.** Procédé selon l'une quelconque des revendications précédentes, dans lequel l'étape d'ajustement de la fréquence du second signal afin de contrebalancer l'effet de ladite dérive en fréquence lors du décodage du second signal au niveau du premier dispositif (16) consiste à établir la fréquence du second signal pour qu'elle soit proportionnelle, ou pratiquement égale, à la fréquence du premier signal.

**6.** Equipement de communication de données comprenant un premier dispositif (16) configuré pour transmettre un premier signal à un second dispositif (18), ledit second dispositif (18) étant configuré pour transmettre un second signal audit premier dispositif (16), l'équipement comprenant,

un moyen de mesure (24) au niveau du second dispositif (18) conçu pour mesurer un paramètre du premier signal transmis par le premier dispositif (16), et

un moyen d'ajustement (24) destiné à ajuster le paramètre correspondant du second signal transmis par le second dispositif (18) en réponse au paramètre mesuré,

**caractérisé en ce que**,

le premier dispositif (16) comprend un premier oscillateur (22) en tant que base de temps pour le premier signal, et le second dispositif comprend un second oscillateur (16) en tant que base de temps pour le second signal, le premier oscillateur (22) étant sujet à une dérive en fréquence par rapport au second oscillateur (26),

le moyen de mesure (24) au niveau du second dispositif (18) est conçu pour mesurer la fréquence du premier signal en faisant référence au second oscillateur (26),

l'équipement comprend un moyen de décodage (20) dans le premier dispositif (16) afin de décoder le second signal en faisant référence au premier oscillateur (22), et

le moyen d'ajustement (24) est conçu afin d'ajuster la fréquence du second signal afin de contrebalancer l'effet de ladite dérive en fréquence lors du décodage du second signal par le moyen de décodage (20) dans le premier dispositif (16).

7. Equipement selon la revendication 6, dans lequel le premier oscillateur (22) est un oscillateur R-C, et le second oscillateur (26) est un oscillateur à cristal.

8. Equipement selon la revendication 6 ou 7, dans lequel les premier et second dispositifs (16, 18) sont configurés pour transmettre les premier et second signaux en tant que signaux modulés par largeur d'impulsion.

9. Equipement selon la revendication 6, 7 ou 8, dans lequel le premier dispositif (16) est un régulateur de tension pour un alternateur d'automobile, et le second dispositif (18) est un module de commande de transmission.

10. Equipement selon l'une quelconque des revendications 6 à 9, dans lequel le moyen d'ajustement (24) est conçu pour ajuster la fréquence du second signal en établissant la fréquence du second signal pour qu'elle soit proportionnelle, ou pratiquement égale, à la fréquence du premier signal.